# EUROPEAN PATENT APPLICATION

(11) **EP 4 730 538 A1**
(43) Date of publication of application: **22.04.2026**
(21) Application number: 25755067.3
(22) Date of filing: 14.01.2025
(51) Int. Cl.: H01M 50/383, H01M 50/342, H01M 50/375, H01M 50/271, H01M 50/211, H01M 50/249

(54) **BATTERY MODULE, BATTERY PACK AND VEHICLE INCLUDING SAME**

(30) Priority: 15.02.2024 KR 20240021936
(71) Applicant: LG Energy Solution, Ltd., Seoul 07335 (KR)
(72) Inventor: YUN, Hyun-Seop, Daejeon 34122 (KR); KIM, Kwang-Mo, Daejeon 34122 (KR); PARK, Min-Soo, Daejeon 34122 (KR); LEE, Jung-Hoon, Daejeon 34122 (KR); JUNG, Hye-Mi, Daejeon 34122 (KR)
(74) Representative: Plasseraud IP
(86) International application number: PCT/KR2025/000809
(87) International publication number: WO 2025/173945

(57) **Abstract**

A battery module according to an embodiment of the present disclosure may include: a plurality of battery cells; a module terminal configured to be electrically connected to the plurality of battery cells; a module frame configured to store the plurality of battery cells, and including a first plate having a first venting hole formed therein and a second plate having the module terminal provided therein; and a frame cover including a first cover configured to cover at least the first plate, and a second cover connected to the first cover so as to cover at least the second plate.

## Description

### TECHNICAL FIELD

The present disclosure relates to a battery module, and a battery pack and vehicle including the same.

This application is based on and claims priority from Korean Patent Application No. 10-2024-0021936, filed on February 15, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When an output voltage higher than this is required, a battery module or a battery pack may be configured by connecting a plurality of battery cells in series. In addition, a battery module or a battery pack may be configured by connecting multiple battery cells in parallel in order to increase the charge/discharge capacity. Accordingly, the number of battery cells included in the battery module or battery pack may be set in various ways depending on the required output voltage or charge/discharge capacity.

Meanwhile, since battery cells undergo chemical reactions during charging and discharging, their performance may deteriorate if they are used at a temperature higher than an appropriate temperature, and if the heat fails to be controlled to the appropriate temperature, unexpected ignition or explosion is more likely to occur. The battery module has a structure in which the battery cells are densely stored in a module frame. Therefore, if a thermal event occurs inside a battery cell, high-temperature gas or flame emitted from the battery cell may spread to adjacent battery cells, causing a chain reaction of explosions in the battery cells, which is very dangerous.

In particular, the module frame of the battery module is made of metal, so if a thermal event occurs inside the battery module or in an adjacent battery module, it may act as a heat source to accelerate thermal propagation between the battery modules.

Therefore, conventional battery modules are equipped with a frame cover configured to cover the outer side of the module frame, especially the upper surface, to minimize the high-temperature gas or flame generated inside the battery module when a thermal runaway occurs therein from moving to other battery modules, thereby preventing thermal propagation between the battery modules and preventing the discharged gas or flame from flowing back into the battery module.

The frame cover is configured in the form of a composite sheet of FRB or silicon and mica, and attached to the module frame with an adhesive. However, when thermal runaway occurs in the battery module, the frame cover is deformed due to high-temperature gas or flame to lift from the module frame. Accordingly, there is a problem in which high-temperature gas or flame is discharged to other battery modules and flows back into the battery module where thermal runaway occurred.

Therefore, there is a need to develop a structure capable of preventing thermal runaway propagation between battery modules when thermal runaway occurs in the battery module, thereby protecting the module frame.

### DISCLOSURE

### Technical Problem

The present disclosure is designed to solve the problems of the related art, and therefore the present disclosure is directed to providing a battery module capable of minimizing the high-temperature gas or flame generated from a battery cell in the event of an abnormal situation in the battery module from moving to adjacent battery modules, thereby effectively preventing or delaying the thermal runaway propagation between the modules.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a plurality of battery cells; a module terminal configured to be electrically connected to the plurality of battery cells; a module frame configured to store the plurality of battery cells, and including a first plate having a first venting hole formed therein and a second plate having the module terminal provided therein; and a frame cover including a first cover configured to cover at least the first plate, and a second cover connected to the first cover so as to cover at least the second plate.

The first cover may be configured to further cover at least one of third plates of the module frame provided on left and right ends of the first plate.

The second cover may be configured to further cover a fourth plate of the module frame provided on the opposite side of the second plate.

The second plate and the fourth plate of the module frame may be located on a side where an electrode lead of the battery cell extends.

The first plate may be defined as an upper surface of the module frame, and the second plate may be defined as a front surface of the module frame.

The frame cover may be configured to be mounted on the module frame.

The frame cover may include a bent portion obtained by bending an end thereof inward and configured to at least partially cover a lower surface of the module frame.

At least one pair of bent portions may be provided to face each other.

The frame cover may include a guide portion configured to guide a coupling position with the module frame.

The frame cover may be configured to have a second venting hole formed at a position corresponding to the first venting hole.

The second venting hole may be formed in the first cover.

The frame cover may include a cover member configured to cover the second venting hole and to be opened by venting gas.

In another aspect of the present disclosure, there is provided a battery pack including a battery module according to the present disclosure.

In another aspect of the present disclosure, there is provided a vehicle including a battery module according to the present disclosure.

### Advantageous Effects

According to one aspect of the present disclosure, since the frame cover is made of a hard and heat-resistant material, deformation thereof due to high-temperature gas or flame may be minimized. As a result, the module frame may be protected, and thermal propagation between the battery modules may be prevented.

In addition, according to another aspect of the present disclosure, it is possible to minimize high-temperature gas or flame generated from a battery cell when the battery module is in an abnormal state from moving to adjacent battery modules, so thermal runaway propagation between the modules can be effectively prevented or delayed. As a result, the safety and reliability of the battery module can be guaranteed.

In addition, according to another aspect of the present disclosure, separation of the frame cover from the module frame may be minimized by securing the bonding or fixing force between the frame cover and the module frame.

In addition, according to another aspect of the present disclosure, since the bonding structure between the frame cover and the module frame is simplified, workability or productivity in manufacturing the battery module may be improved.

In addition, according to another aspect of the present disclosure, high-temperature gas or flame generated from battery cells in the event of an abnormal situation of the battery module may be prevented from flowing back into the battery module. Accordingly, the safety and reliability of the battery module may be guaranteed.

In addition, according to another aspect of the present disclosure, it is possible to prevent or delay events such as fire or explosion due to thermal runaway of a battery pack including multiple battery modules or a device equipped with them.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematically perspective view of a battery module according to an embodiment of the present disclosure.
FIG. 2 is a schematically perspective view of a module frame of a battery module according to an embodiment of the present disclosure.
FIG. 3 is an exploded perspective view of a battery module according to an embodiment of the present disclosure.
FIG. 4 is a cross-sectional view of a battery module according to an embodiment of the present disclosure, which may be a cross-sectional view taken along line I - I' in FIG. 1.
FIG. 5 is a cross-sectional view of a battery module according to an embodiment of the present disclosure, which may be a cross-sectional view taken along line II - II' in FIG. 1.
FIG. 6 is a drawing illustrating a frame cover being coupled to a battery module according to an embodiment of the present disclosure.
FIG. 7 is a perspective view of a frame cover applied to a battery module according to an embodiment of the present disclosure.
FIG. 8 is a perspective view of a frame cover applied to a battery module according to an embodiment of the present disclosure.
FIG. 9 is a partially enlarged view of a battery module in which a guide portion is provided in the frame cover according to an embodiment of the present disclosure.
FIG. 10 is an exploded perspective view of a guide portion provided in a frame cover according to an embodiment of the present disclosure.
FIG. 11 is a drawing illustrating a cover member of a frame cover applied to a battery module according to an embodiment of the present disclosure.
FIG. 12 is a drawing illustrating a state in which a part of a cover member of a frame cover applied to a battery module is opened according to an embodiment of the present disclosure.
FIG. 13 is a schematically perspective view of a battery pack including a battery module according to an embodiment of the present disclosure.
FIG. 14 is a schematically perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

Although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

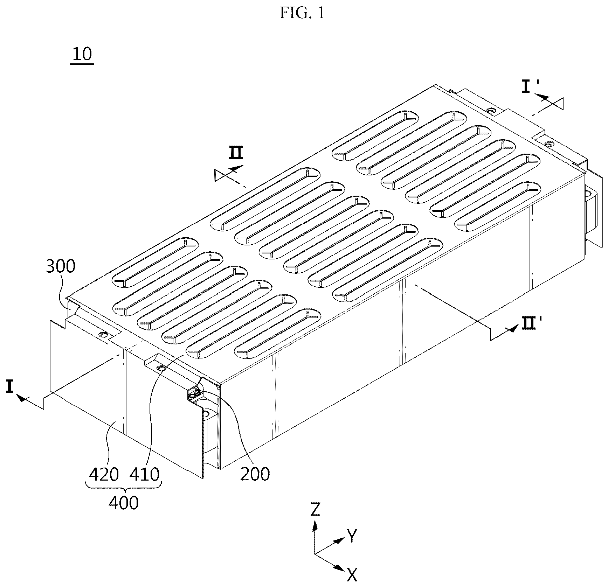

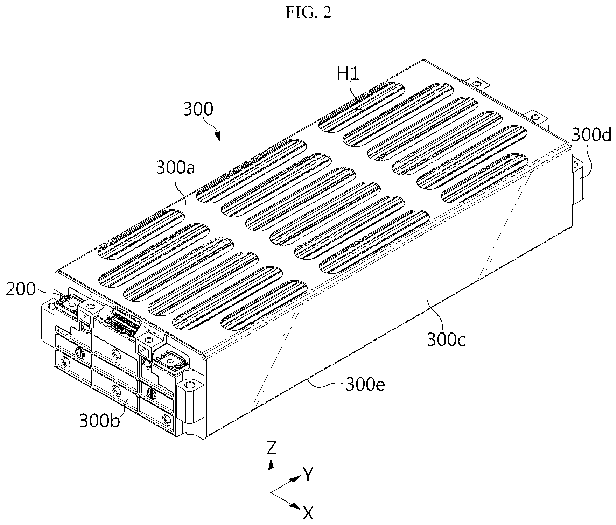

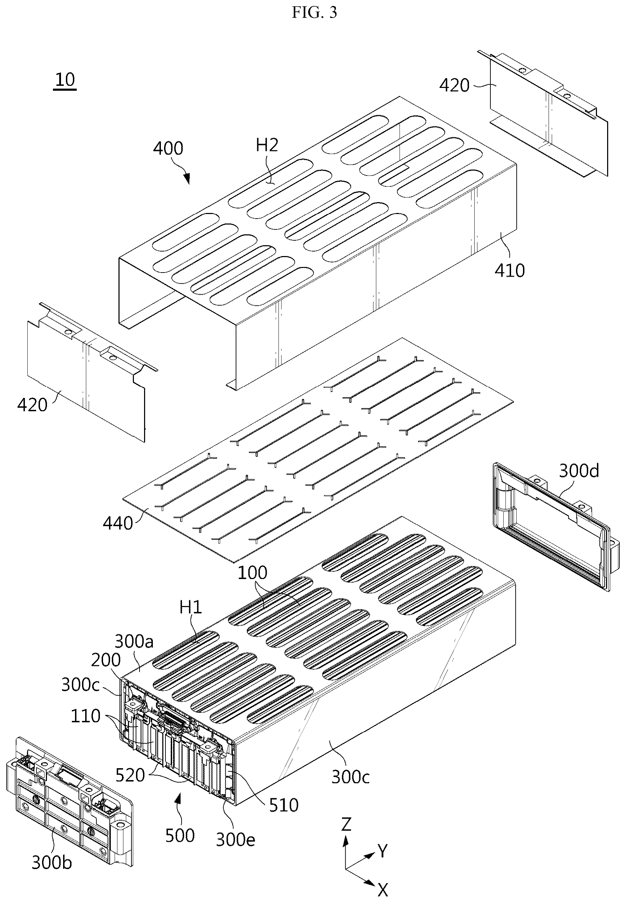

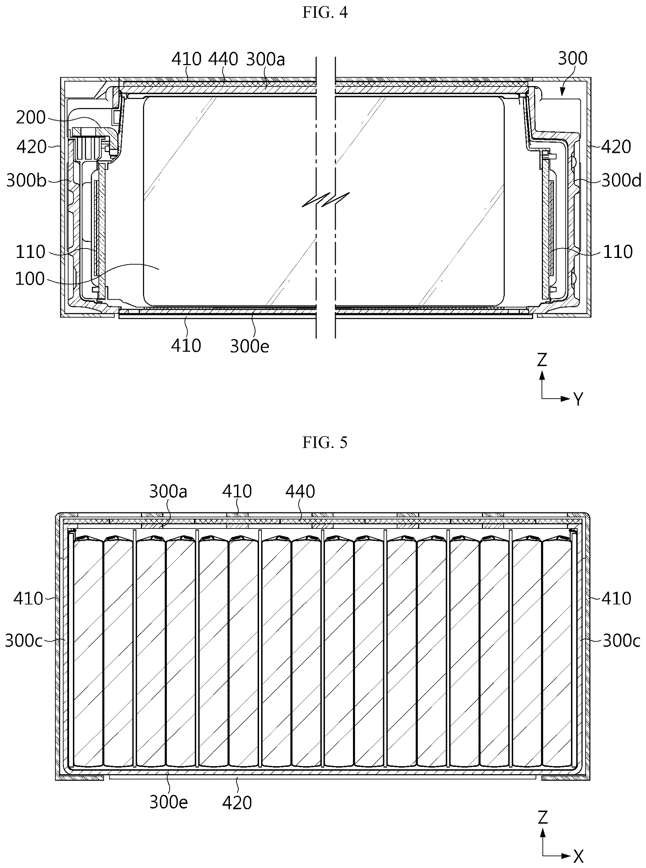

FIG. 1 is a schematically perspective view of a battery module according to an embodiment of the present disclosure, FIG. 2 is a schematically perspective view of a module frame of a battery module according to an embodiment of the present disclosure, FIG. 3 is an exploded perspective view of a battery module according to an embodiment of the present disclosure, and FIG. 4 is a cross-sectional view of a battery module according to an embodiment of the present disclosure, which may be a cross-sectional view taken along line I - I' in FIG. 1. In addition, FIG. 5 is a cross-sectional view of a battery module according to an embodiment of the present disclosure, which may be a cross-sectional view taken along line II - II' in FIG. 1.

Referring to FIGS. 1 to 5, a battery module 10 according to an embodiment of the present disclosure may include a battery cell 100, a module terminal 200, a module frame 300, and a frame cover 400.

Referring to FIG. 2, a plurality of battery cells 100 may be included. In this case, the plurality of battery cells 100 may be electrically connected to each other.

The plurality of battery cells 100 may be stacked along one direction. For example, as illustrated in FIG. 3, the plurality of battery cells 100 may be arranged side by side in the left-right direction (X-axis direction) while standing in the vertical direction (Z-axis direction).

In addition, the plurality of battery cells 100 may be, for example, pouch-type secondary batteries. The plurality of battery cells 100 may include an electrode assembly, a cell case that stores the electrode assembly, and an electrode lead 110 that is connected to the electrode assembly and extends to the outside of the cell case, thereby functioning as an electrode terminal.

The electrode leads 110 may be provided as a pair, and the pair of electrode leads 110 may extend toward both ends of the battery cell 100, i.e., in the longitudinal direction (±Y direction). In this case, the pair of electrode leads 110 may be a positive electrode lead and a negative electrode lead.

The present disclosure is not limited to a specific type or shape of the battery cell 100, and various battery cells 100 known at the time of filing the present disclosure may be applied to configure the plurality of battery cells 100 of the present disclosure. Although a pouch-type secondary battery, shown in the drawing, with high energy density and easy stacking will be described in the present embodiment, it is obvious that a cylindrical or prismatic secondary battery may be applied to the battery cell 100.

Referring to FIGS. 2 and 3, the module frame 300 may be configured to store the battery cell 100. Specifically, an inner space may be formed in the module frame 300, and the inner space may be configured to store the battery cells 100.

The module frame 300 may be formed of a metal material having rigidity and heat resistance to physically or chemically protect the stored battery cells 100.

A first venting hole H1 may be formed in the module frame 300. The first venting hole H1 may be configured to discharge venting gas generated from the battery cell 100 to the outside of the module frame 300. The first venting hole H1 enables directional venting in one direction.

The first venting hole H1 may be formed in a first plate 300a of the module frame 300. For example, as shown in FIGS. 1 to 5, the first plate 300a may be defined as the upper surface of the module frame 300, and directional venting of the battery module 10 may be performed upward through the first venting hole H1 formed on the upper surface of the module frame 300.

A plurality of first venting holes H1 may be provided to be arranged at regular intervals along the horizontal direction (X-axis and Y-axis directions).

According to the above-implemented configuration of the present disclosure, when gas is generated due to thermal runaway in any one of the battery cells 100, the gas may be quickly vented in a specific direction.

In addition, the module frame 300 may be provided with a module terminal 200. The module terminal 200 may be configured to be electrically connected to the plurality of battery cells 100. The module terminal 200 may include a positive electrode terminal and a negative electrode terminal. In addition, the module terminal 200 may be configured to be electrically or communicatively connected to a control device such as a BMS. The module terminal 200 may be configured to extend, at least in part, to the outside of the module frame 300.

The module terminal 200 may be provided on the side of the battery cell 100 where the electrode lead 110 extends to the outside. In particular, the module terminal 200 may be provided on a second plate 300b of the module frame 300. For example, as shown in FIGS. 1 to 5, the second plate 300b may be defined as the front surface of the module frame 300, and the module terminal 200 may be provided on the front side of the module frame 300.

Referring to FIGS. 3 and 4, the frame cover 400 may be configured to cover at least a portion of the module frame 300. The frame cover 400 may be provided outside the module frame 300. The frame cover 400 may be configured to suppress venting gas or flame released when a thermal event occurs inside the battery module 10 from moving to another battery module 10.

The frame cover 400 may be formed of a material having excellent heat resistance and/or fire resistance, such as a mica sheet or a silicone composite material. For example, the frame cover 400 may be formed of an inflexible material obtained by heat-molding a mica sheet.

Accordingly, the frame cover 400 may maintain morphological stability without deformation even when high-temperature heat is generated, thereby stably blocking high-temperature gas or flame generated from the battery cell 100.

According to the above-implemented configuration of the present disclosure, since the frame cover 400 is formed of a hard and heat-resistant material, deformation thereof due to high-temperature gas or flame may be minimized.

More specifically, the frame cover 400 may include a first cover 410 and a second cover 420. The first cover 410 may be configured to cover at least the first plate 300a of the module frame 300. The first cover 410 may be configured to protect the first venting hole H1. For example, the first cover 410 may be configured to prevent venting gas or flame discharged from another battery module 10 from flowing into the module frame 300 through the first venting hole H1.

The second cover 420 may be configured to cover at least the second plate 300b of the module frame 300. As described above, the second plate 300b may be provided with a module terminal 200, and the second cover 420 may be configured to protect the module terminal 200. That is, the second cover 420 may be configured to suppress venting gas or flame discharged from another battery module 10 from moving to the module terminal 200.

The second cover 420 may be provided to be connected to the first cover 410. For example, the second cover 420 may be formed integrally with the first cover 410 by injection molding and folding, or may be manufactured separately from the first cover 410 and coupled thereto.

According to the above-implemented configuration of the present disclosure, the first cover 410 and the second cover 420 are configured to protect the first venting hole H1 and the module terminal 200, respectively, so that when an abnormal situation occurs in an adjacent battery module 10, high-temperature venting gas or flame may be minimized from moving toward the first venting hole H1 or module terminal 200 of the battery module 10. In particular, since the frame cover 400 covers the module frame 300 from various directions, heat may be effectively suppressed from being transferred to the outside of the module frame 300 or to the module frame 300. Thus, according to the above-implemented configuration of the present disclosure, thermal runaway propagation between the battery modules 10 may be effectively prevented or delayed, so that the safety and reliability of the battery module 10 may be guaranteed.

Meanwhile, referring to FIG. 2, the module frame 300 according to an embodiment of the present disclosure may further include a third plate 300c, a fourth plate 300d, and a fifth plate 300e. The first plate 300a to the fifth plate 300e may form the exterior of the module frame 300. The module frame 300 may be configured in a cuboid shape by the first plate 300a to the fifth plate 300e.

More specifically, the third plate 300c may be provided on left and right ends of the first plate 300a. That is, a plurality of third plates 300c may be provided so as to face each other. For example, as shown in the drawing, the first plate 300a may form the upper surface of the module frame 300, and the third plates 300c may be configured to form left and right sides of the module frame 300 on both sides of the first plate 300a.

In addition, the fifth plate 300e may be configured to face the first plate 300a. For example, as shown in the drawing, the first plate 300a may be configured to form the upper surface of the module frame 300, and the fifth plate 300e may be configured to form the lower surface of the module frame 300.

Here, the first plate 300a, the third plate 300c, and the fifth plate 300e may be configured in an integrated form. In this case, the first plate 300a, the third plate 300c, and the fifth plate 300e may be combined to a square tube with front and rear openings. Alternatively, the third plate 300c and the fifth plate 300e may be configured in an integrated form.

The first cover 410 may be configured to further cover at least one of the third plates 300c of the module frame 300 provided on the left and right ends of the first plate 300a. That is, the first cover 410 may be configured to further cover at least one third plate 300c in addition to the first plate 300a. For example, as shown in FIGS. 3 and 5, the first cover 410 may be configured to cover the first plate 300a provided on the upper side and the third plates 300c provided on the left and right sides.

The first cover 410 may be configured to be bent at the boundary between the first plate 300a and the third plate 300c so as to cover both the first plate 300a and the third plate 300c. That is, the first cover 410 may be configured as a single sheet that is bent.

According to the above-implemented configuration of the present disclosure, the first cover 410 may cover not only the first plate 300a having the first venting hole H1 but also both sides of the first plate 300a, thereby preventing venting gas or flame caused by a thermal event occurring inside the module frame 300 from being released toward the third plate 300c. At the same time, the frame cover 400 may block venting gas or flame from moving from the outside toward the third plate 300c.

Meanwhile, the fourth plate 300d may be provided on the opposite side of the second plate 300b. That is, the second plate 300b and the fourth plate 300d may be configured to face each other. The second plate 300b and the fourth plate 300d of the module frame 300 may be positioned on the side from which the electrode leads 110 of the battery cell 100 extend. That is, the second plate 300b and the fourth plate 300d may be positioned on the sides where a bus-bar frame assembly 500 is provided.

For example, as shown in the drawing, the second plate 300b may be configured to form the front surface of the module frame 300, and the fourth plate 300d may be configured to form the rear surface of the module frame 300. The second plate 300b and the fourth plate 300d may be coupled to the front and rear openings of the integrated first plate 300a, third plate 300c, and fifth plate 300e.

Meanwhile, referring to FIG. 3, the battery module 10 of the present disclosure may further include a bus-bar frame assembly 500. The bus-bar frame assembly 500 may be provided inside the module frame 300 and configured to cover at least one side of the plurality of battery cells 100. The bus-bar frame assembly 500 may be positioned on the side where the electrode leads 110 of the battery cells 100 extend. In the present embodiment, as illustrated in FIG. 2, the bus-bar frame assembly 500 may be coupled to the front and rear sides of the plurality of battery cells 100.

The bus-bar frame assembly 500 may include a bus-bar frame 510 and a plurality of bus-bars 520. The bus-bar frame 510 may be provided to be connected to the front and rear sides of the plurality of battery cells 100. The bus-bar frame 510 may have slits through which the electrode leads of the battery cells 100 may extend in the front-rear direction.

In addition, the bus-bar frame 510 may be formed of a material having electrical insulation, such as a plastic material, and configured such that the bus-bar 520 may be attached to the outer surface thereof.

Meanwhile, the plurality of bus-bars 520, as means for connecting the battery cells 100 in series and/or in parallel, may be formed of a metal material, such as copper, aluminum, or nickel, and may be configured in a rod shape.

The electrode leads of the battery cells 100 may extend to the outside of the bus-bar frame 510 by passing through the slits of the bus-bar frame 510, and the extending portions may be coupled to the surface of the bus-bar 520 by welding or the like.

As the bus-bar frame assembly 500 is provided, the second plate 300b and the fourth plate 300d may be formed of, for example, an insulating material on the inner side and a metal material on the outer side to secure electrical insulation. In addition, at least one of the second plate 300b and the fourth plate 300d may have partially holes or slits to expose components that need to be exposed to the outside, such as a module terminal 200 or connector of the battery module 10.

In this case, the second cover 420 may be configured to further cover the fourth plate 300d of the module frame 300 provided on the opposite side of the second plate 300b. That is, the second cover 420 may be configured to further cover the fourth plate 300d in addition to the second plate 300b. For example, as shown in FIGS. 3 and 5, the second cover 420 may be configured to cover the second plate 300b provided on the front surface and the fourth plate 300d provided on the rear surface. Two second covers 420 may be provided to face each other.

According to the above-implemented configuration of the present disclosure, the second cover 420 may cover not only the second plate 300b equipped with the module terminal 200 but also the fourth plate 300d, thereby preventing venting gas or flame generated due to a thermal event occurring inside the module frame 300 from being discharged toward the fourth plate 300d. At the same time, the frame cover 400 may block venting gas or flame from moving from the outside toward the fourth plate 300d. In particular, the frame cover 400 covers the second plate 300b and the fourth plate 300d provided on the sides where the electrode leads 110 of the battery cell 100 are located, thereby preventing the electrode leads 110 or the bus-bars 520 from being damaged by venting gas or flame.

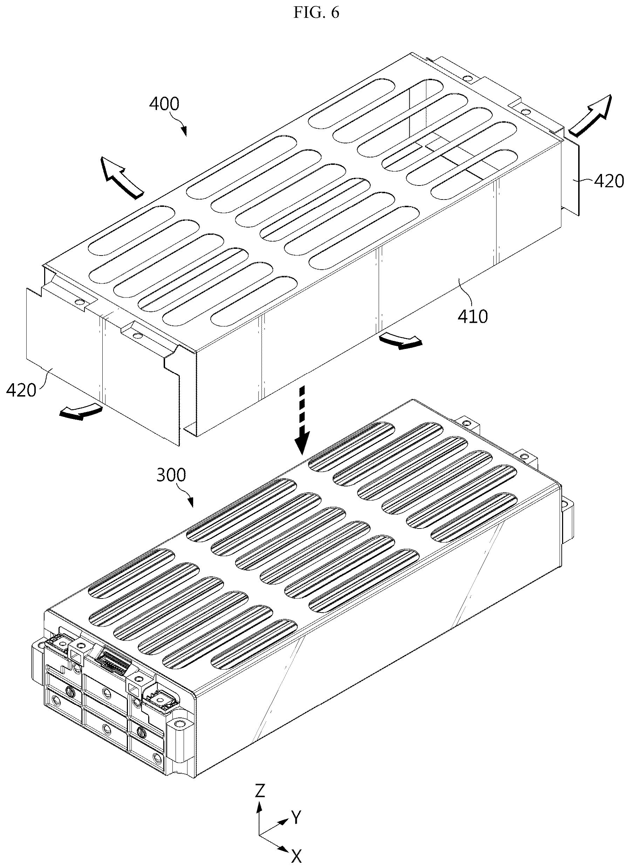

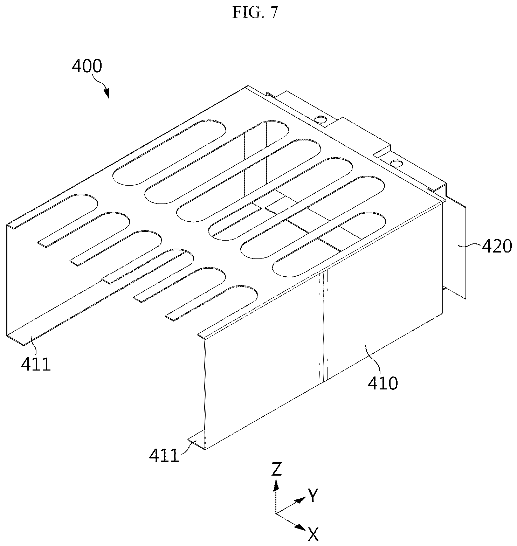

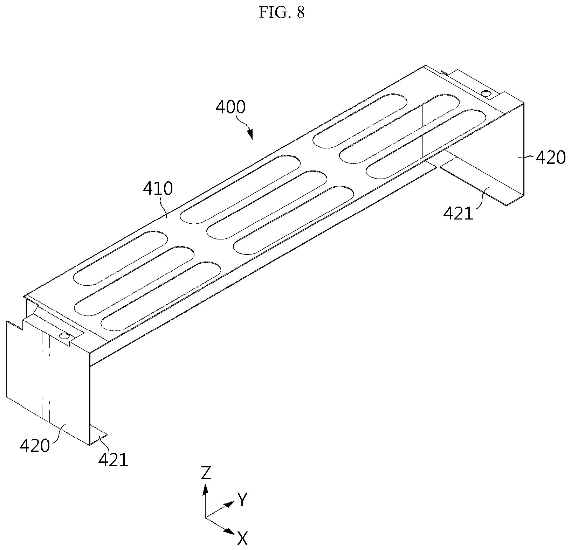

FIG. 6 is a drawing illustrating a frame cover being coupled to a battery module according to an embodiment of the present disclosure, FIG. 7 is a perspective view of a frame cover applied to a battery module according to an embodiment of the present disclosure, and FIG. 8 is a perspective view of a frame cover applied to a battery module according to an embodiment of the present disclosure.

Referring to FIGS. 6 to 8, the first plate 300a may be defined as the upper surface of the module frame 300, and the second plate 300b may be defined as the front surface of the module frame 300. Accordingly, the first cover 410 and the second cover 420 may be configured to cover the upper surface and the front surface of the module frame 300, respectively.

In addition, the first cover 410 and the second cover 420 may be disposed along directions orthogonal to each other. For example, the first cover 410 may be configured to cover the upper surface and the left and right sides of the module frame 300 along the left-right direction, and the second cover 420 may be configured to cover the front and rear sides of the module frame 300 along the front-back direction. In this case, the second cover 420 may be provided to be coupled to the front and rear sides of the first cover 410. Alternatively, the first cover 410 and the second cover 420 may be manufactured as one piece to be foldable.

The frame cover 400 may be configured to be mounted on the module frame 300. That is, the frame cover 400 may be configured to be mounted on the top of the module frame 300 and cover at least a portion of the module frame 300. As shown in FIG. 6, in the case where the frame cover 400 is configured to cover all surfaces of the module frame 300, excluding the fifth plate 300e, the first cover 410 and the second cover 420 may be mounted on the module frame 300 while their respective ends are open outward (see the arrows in FIG. 6).

When the frame cover 400 is mounted on the module frame 300, the frame cover 400 may be configured to be in close contact with the module frame 300. More specifically, the frame cover 400 may be configured to be fixed to the module frame 300. For example, as shown in FIGS. 6 to 8, the frame cover 400 may have bent portions 411 and 421. The bent portions 411 and 421 may be obtained by bending the ends of the frame cover 400 inward. The bent portions 411 and 421 may be configured to cover at least a portion of the lower surface of the module frame 300, that is, the fifth plate 300e. That is, when the frame cover 400 is mounted to the module frame 300, the bent portions 411 and 421 of the frame cover 400 may be configured to be fixed by being caught on the lower surface of the module frame 300.

The bent portions 411 and 421 may be provided in at least one pair. A pair of bent portions 411 and 421 may be configured to face each other. For example, as shown in FIGS. 7 and 8, the first cover 410 may have first bent portions 411 on the left and right sides, and the second cover 420 may also have second bent portions 421. The first bent portion 411 and the second bent portion 421 may be provided as a pair, respectively, and may be disposed to be perpendicular to each other. Accordingly, the first bent portion 411 and the second bent portion 421 may fix the module frame 300 in the front-back direction and left-right direction.

Furthermore, a thermally conductive adhesive such as TIM or thermal resin may be applied to the bottom surface of the module frame 300. Accordingly, the bent portions 411 and 421 may be fixed by the thermally conductive adhesive, thereby further preventing the frame cover 400 from being separated from the module frame 300.

According to the above-implemented configuration of the present disclosure, since the bonding force or fixing force between the frame cover 400 and the module frame 300 is secured, the separation of the frame cover 400 from the module frame 300 may be minimized. In addition, according to the above-implemented configuration of the present disclosure, since the fixing structure between the frame cover 400 and the module frame 300 is simplified, the workability or productivity in manufacturing the battery module 10 may be improved. In particular, since a separate adhesive is unnecessary, the problem with the frame cover 400 lifting from the module frame 300 by high-temperature venting gas or flame when thermal runaway occurs in the battery module 10 may be fundamentally prevented.

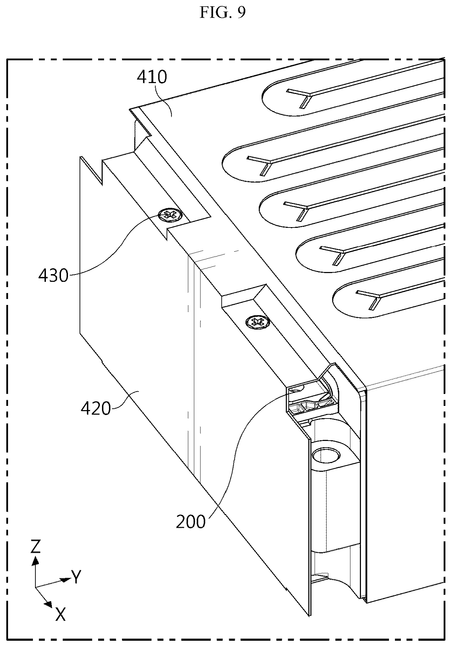

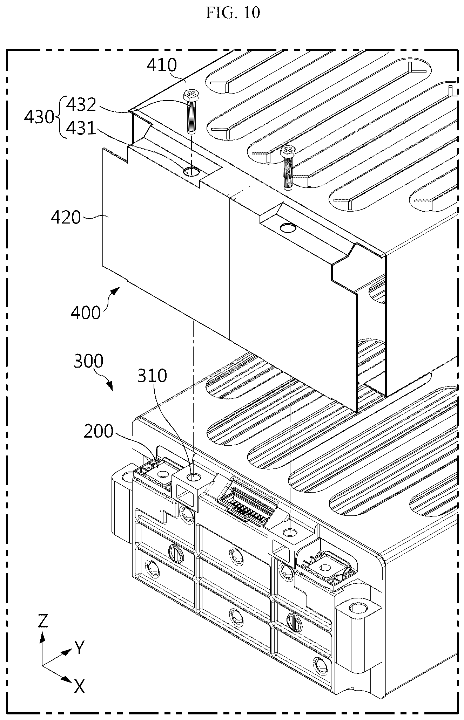

FIG. 9 is a partially enlarged view of a battery module in which a guide portion is provided in the frame cover according to an embodiment of the present disclosure. In addition, FIG. 10 is an exploded perspective view of a guide portion provided in a frame cover according to an embodiment of the present disclosure.

Meanwhile, referring to FIGS. 9 and 10, the frame cover 400 may be provided with a guide portion 430. The guide portion 430 may be configured to guide a coupling position with the module frame 300. In addition, the guide portion 430 may be configured to fix the module frame 300 and the frame cover 400 to each other.

More specifically, referring to FIG. 10, the guide portion 430 may have a guide hole 431 and a guide pin 432. A plurality of guide holes 431 and a plurality of guide pins 432 may be provided. The guide hole 431 may be formed in the frame cover 400. A fixing hole 310 may be formed at a position corresponding to the guide hole 431 in the module frame 300. For example, the fixing hole 310 may be provided in the second plate 300b. The fixing hole 310 may be provided further inward than the module terminal 200.

The guide pin 432, the guide hole 431, and the fixing hole 310 may be disposed in a vertical direction. The guide pin 432 may be provided as a pin. The guide pin 432 may be configured to pass through the guide hole 431. The guide pin 432 may be configured to be inserted into the fixing hole 310 through the guide hole 431.

According to the above-implemented configuration of the present disclosure, the frame cover 400 may be guided more simply when the frame cover is coupled to the module frame 300. Therefore, the workability and productivity may be improved in manufacturing the battery module 10. In addition, the frame cover 400 may be more firmly fixed to the module frame 300, thereby preventing the frame cover 400 from being separated from the module frame 300. Therefore, the frame cover 400 may be prevented from lifting from the module frame 300, thereby protecting the module frame 300 more reliably from venting gas or flames.

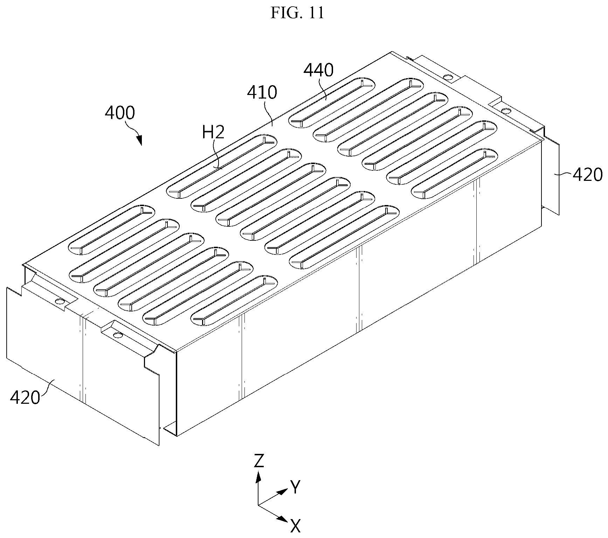

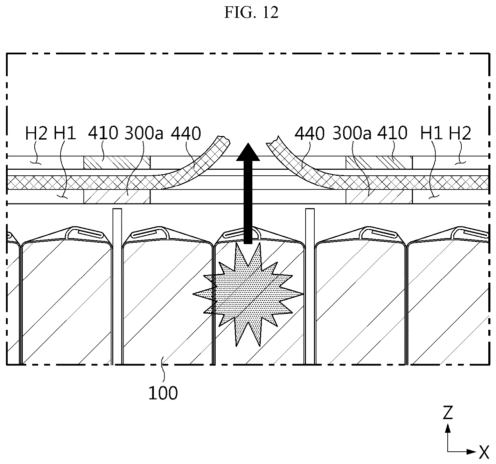

FIG. 11 is a drawing illustrating a cover member of a frame cover applied to a battery module according to an embodiment of the present disclosure, and FIG. 12 is a drawing illustrating a state in which a part of a cover member of a frame cover applied to a battery module is opened according to an embodiment of the present disclosure.

Referring to FIGS. 11 and 12, a second venting hole H2 may be formed in the frame cover 400. The second venting hole H2 may be configured to discharge the venting gas released through the first venting hole H1 to the outside of the battery module 10.

A plurality of second venting holes H2 may be arranged at regular intervals along the horizontal direction (X-axis and Y-axis directions). In particular, the second venting hole H2 may be formed at a position corresponding to the first venting hole H1. The second venting hole H2 may be formed in the first cover 410. Accordingly, according to the above-implemented configuration of the present disclosure, venting gas or flame may be rapidly vented to a specific direction through the first venting hole H1 and the second venting hole H2.

Meanwhile, the frame cover 400 may include a cover member 440. The cover member 440 may be configured to cover the second venting hole H2. The cover member 440 may be provided on the inner side of the second venting hole H2. That is, the cover member 440 may be provided between the first venting hole H1 and the second venting hole H2.

The cover member 440 may be configured in a sheet form and may be seated on the first plate 300a. In this case, the cover member 440 may be configured to cover a plurality of second venting holes H2 at once. Alternatively, the cover member 440 may be configured to cover the second venting holes H2, respectively. The cover member 440 may be attached to the inner side of the first cover 410 or may be attached to the first plate 300a of the module frame 300.

Such a cover member 440 may be configured to be opened at least in part by venting gas or flame, as shown in FIG. 12. Specifically, at least a portion of the cover member 440 may be configured to be ruptured by the pressure or heat of the venting gas heading toward the first venting hole H1. For example, the cover member 440 may have a notch or a cut line at a portion corresponding to the first venting hole H1.

According to the above-implemented configuration of the present disclosure, when a thermal event occurs in a specific battery cell 100, the cover member 440 provided on one side of the specific battery cell 100 may be ruptured, thereby opening at least one of the plurality of first venting holes H1. Accordingly, the venting gas or the like may be discharged to the outside of the module frame 300 through the opened first venting hole H1.

In addition, the cover member 440 may prevent the gas or flame discharged to the outside of the module frame 300 from flowing back into the battery module 10. That is, the first venting hole H1 provided on the side of the battery cell 100 where the thermal event does not occur may remain in a closed state without being opened. To this end, the cover member 440 may be made of a material having excellent flame-retardant performance. For example, the cover member 440 may include a material such as silicone or FRB.

As a result, the venting gas or flame discharged to the outside through the opened first venting hole H1 may be fundamentally blocked from flowing back into the battery module 10. In addition, the remaining portions of the cover member 440 that are not ruptured may block not only heat but also high-temperature gas, flame, and discharges generated from the battery cell 100.

According to the above-implemented configuration of the present disclosure, when thermal runaway occurs in the battery module 10, not only may the venting gas or flame generated inside the battery module 10 be smoothly discharged to the outside of the battery module 10, but also the discharged venting gas or flame may be prevented from flowing back into the battery module 10. Therefore, the thermal runaway propagation may be effectively prevented or delayed by minimizing the thermal propagation to neighboring battery cells 100 or battery modules 10.

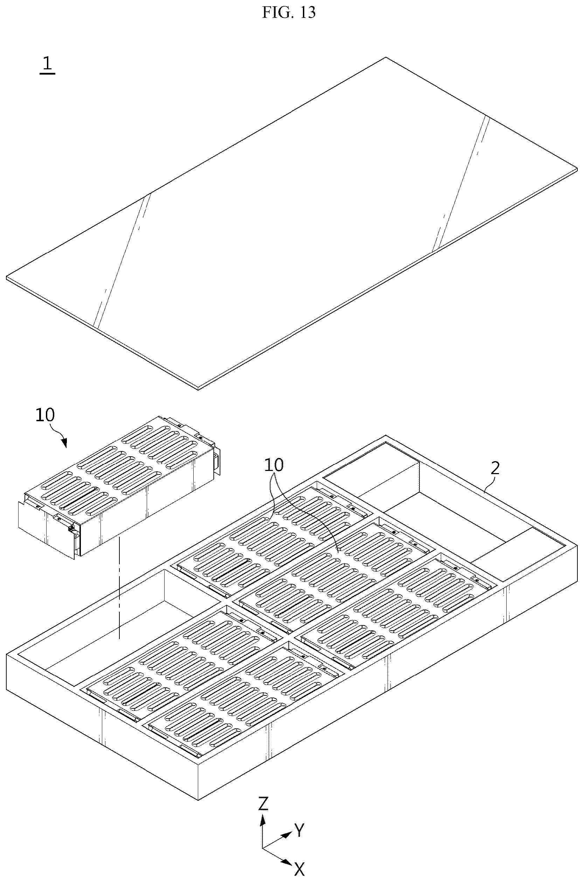

FIG. 13 is a schematically perspective view of a battery pack including a battery module according to an embodiment of the present disclosure.

Referring to FIG. 13, a battery pack 1 according to an embodiment of the present disclosure may include one or more battery modules 10 according to an embodiment of the present disclosure described above. The battery pack 1 according to the present disclosure may further include a pack case 2 for storing a BMS (Battery Management System), a current sensor, and a fuse for integrated control of charging and discharging of one or more battery modules, and the components described above.

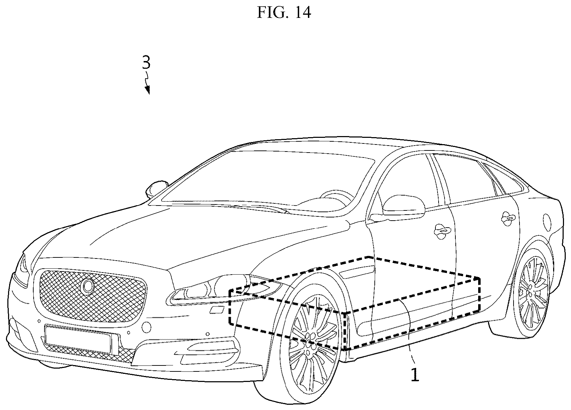

FIG. 14 is a schematically perspective view of a vehicle including a battery pack according to an embodiment of the present disclosure.

Referring to FIG. 14, a vehicle 3 according to an embodiment of the present disclosure may include one or more battery packs 1 according to an embodiment of the present disclosure or battery modules 10 according to an embodiment of the present disclosure. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 receives power from the battery pack 1 or the battery module 10 according to an embodiment of the present disclosure and operates.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a plurality of battery cells;
a module terminal configured to be electrically connected to the plurality of battery cells;
a module frame configured to store the plurality of battery cells, and comprising a first plate having a first venting hole formed therein and a second plate having the module terminal provided therein; and
a frame cover comprising a first cover configured to cover at least the first plate, and a second cover connected to the first cover so as to cover at least the second plate.

2. The battery module according to claim 1,
wherein the first cover is configured to further cover at least one of third plates of the module frame provided on left and right ends of the first plate.

3. The battery module according to claim 1,
wherein the second cover is configured to further cover a fourth plate of the module frame provided on the opposite side of the second plate.

4. The battery module according to claim 3,
wherein the second plate and the fourth plate of the module frame are located on a side where an electrode lead of the battery cell extends.

5. The battery module according to claim 1,
wherein the first plate is defined as an upper surface of the module frame, and
wherein the second plate is defined as a front surface of the module frame.

6. The battery module according to claim 1,
wherein the frame cover is configured to be mounted on the module frame.

7. The battery module according to claim 1,
wherein the frame cover
comprises a bent portion obtained by bending an end thereof inward and configured to at least partially cover a lower surface of the module frame.

8. The battery module according to claim 7,
wherein at least one pair of bent portions are provided to face each other.

9. The battery module according to claim 1,
wherein the frame cover
comprising a guide portion configured to guide a coupling position with the module frame.

10. The battery module according to claim 1,
wherein the frame cover is configured to have a second venting hole formed at a position corresponding to the first venting hole.

11. The battery module according to claim 10,
wherein the second venting hole is formed in the first cover.

12. The battery module according to claim 10,
wherein the frame cover comprises a cover member configured to cover the second venting hole and to be opened by venting gas.

13. A battery pack comprising a battery module according to any one of claims 1 to 12.

14. A vehicle comprising a battery module according to any one of claims 1 to 12.
